**Europäisches Patentamt**

(19) **European Patent Office**

**Office européen des brevets**

(11) Veröffentlichungsnummer: **0 056 861**
**B1**

(12) **EUROPÄISCHE PATENTSCHRIFT**

(45) Veröffentlichungstag der Patentschrift:
**10.04.85**

(21) Anmeldenummer: **81110393.6**

(22) Anmeldetag: **12.12.81**

(51) Int. Cl.⁴: **C 08 L  61/06,** C 08 K  3/32,
C 08 J  9/00, C 08 K  5/00 //
A01G5/04

(54) **Farbstabilisierte Phenolharzschäume.**

(30) Priorität: **23.01.81  DE 3102066**

(43) Veröffentlichungstag der Anmeldung:
**04.08.82 Patentblatt 82/31**

(45) Bekanntmachung des Hinweises auf die Patenterteilung:
**10.04.85 Patentblatt 85/15**

(84) Benannte Vertragsstaaten:
**BE FR GB IT NL**

(56) Entgegenhaltungen:
**DE - A - 2 331 350
DE - A - 2 500 213
FR - A - 573 150
FR - A - 2 007 987
US - A - 3 389 095
US - A - 3 673 130**

**Patent Abstracts of Japan Band 5, Nr. 132, 22. August
1981
Chemical Abstracts Band 85, Nr. 16 18. Oktober 1976
Columbus, Ohio, USA KIMURA et al. "Antioxidants for
phenolic resins" Seite 33, Abstract Nr. 109417x**

(73) Patentinhaber: **DYNAMIT NOBEL
AKTIENGESELLSCHAFT, Postfach 1209,
D-5210 Troisdorf, Bez. Köln (DE)**

(72) Erfinder: **Tiroux, Josef, Im Zehntfeld 6,
D-5210 Troisdorf-Oberlar (DE)**
Erfinder: **Weissenfels, Franz, Dr., Am Grafenkreuz 17,
D-5200 Siegburg (DE)**

## Beschreibung

Gegenstand der vorliegenden Erfindung sind Schäume aus Phenolresolharzen, die durch Zusatz von definierten Stabilisatoren bei Einwirkung von Licht und/oder Wärme eine geringere Farbveränderung zeigen als bekannte Phenolharzschäume.

Es ist bekannt, dass die Widerstandsfähigkeit von festen Körpern, die ganz oder zu einem erheblichen Teil aus gehärteten Phenolformaldehydharzen bestehen, gegen Farbänderungen durch direkte Einwirkung von Licht und/oder Luft und/oder Wärme relativ gering ist im Gegensatz zu manchen anderen ausgehärteten Kunstharzen auf Basis von z.B. Harnstoff- oder Melaminformaldehydharzen, Epoxidharzen, Polyesterharzen. Je nach Phenolharztyp (Novolak oder Resol) und Härtungsart sowie der Intensität bezüglich der Einwirkung von Licht und/oder Luft und/oder Wärme verfärben sich die ausgehärteten Phenolharze von ihrer Eigenfarbe Weiss bis gelblich ausgehend, in Gelb-Braun und fortschreitend in Braun bis Rotbraun, Dunkelbraun bis fast Schwarz.

Bei der Einfärbung von Phenolharzen bzw. Formkörpern aus ausgehärteten Phenolformaldehydharzen ist man daher gezwungen, sich im allgemeinen auf relativ dunkle Farbtöne, wie z.B. dunkelrot, braun, schwarz etc. zu beschränken oder man verzichtet je nach Nutzung der Formkörper ganz auf die Zugabe von Farbstoffen und/oder Pigmenten.

So werden aus Phenolharzen oder unter Verwendung von Phenolharzen als Bindemittel z.B. Giessharzreproduktionen, Schaumstoffe für diverse vorzugsweise technische Anwendungen, Pressmasseformteile, Vergussmassen, Schichtpressstoffe, Formsande für Giessereizwecke, anorganische und organische Fasermatten, Kohleformkörper, Schleifscheiben, Reibbeläge etc. hergestellt. Bei diesen Anwendungen spielen Farbveränderungen nur eine untergeordnete Rolle.

Es gibt jedoch Einsatzgebiete für Phenolharzschaumstoffe, wie z.B. ihre Verwendung in Form von Steckmassen für Schnittblumen, wo man zumindest für eine begrenzte Zeit (z.B. 2–12 Monate) von ihrer Herstellung bis zu ihrer ebenfalls zeitlich begrenzten Verwendung (Verwendungsdauer ca. 1–3 Monate) eine möglichst hohe Stabilität der meist grün eingefärbten Schaumstoffe haben möchte. Diese sogenannten Phenolharz-Blumensteckschäume sind fein- und weitgehend offenporige, sprödharte Schaumstoffe, die in der Regel aus flüssigen schäumfähigen Phenolresolharzen unter Verwendung von organischen Sulfonsäuren, z.B. p-Toluolsulfonsäure, p-Phenolsulfonsäure und im sauren Bereich zumindest kurzfristig weitgehend stabilen Farbstoffen, wie z.B. dem Triphenylmethanfarbstoff Malachitgrün hergestellt werden.

Diese für die Herstellung solcher Schaumstoffe in Betracht kommenden säurefesten grünen Farbstoffe sind in der Regel, wie z.B. Triphenylmethanfarbstoffe, wenig lichtstabil. Beide Faktoren –

d.h. die grundsätzlich geringe Stabilität der Eigenfarbe der gehärteten Phenolharze und die unter Umständen hinzukommende geringe Lichtstabilität der in Frage kommenden Farbstoffe – führen zu einer im Grunde mangelhaften Farbstabilität der bekannten Phenolharzschaumstoffe. Je nach der Intensität der Einwirkung von Licht und/oder Luft und/oder Temperaturen auf solche Schaumstoffe, verfärben sich diese innerhalb von 2–30 Tagen von Grün nach Violett oder Grau oder Braun. Nicht eingefärbte Schaumstoffe dieser Art verfärben sich in der Regel von Weiss bis Rosa (Farbe unmittelbar nach ihrer Herstellung) nach Braun bis Rotbraun.

Im Zusammenhang mit der relativ geringen Widerstandsfähigkeit dieser nicht oder grün eingefärbten Schaumstoffe gegen Farbänderungen, kann als Ursache die Lichteinwirkung kaum getrennt erfasst werden von den Wechselwirkungen durch zusätzliche Einwirkung von Luft und/oder Wärme. Alle Faktoren können durch physikalische Auflockerung des Gefüges dem Abbau durch UV-Licht Wege bahnen.

Es bestand nun die Aufgabe, die Widerstandsfähigkeit von nicht oder im wesentlichen mit Triphenylmethanfarbstoffen grün eingefärbten Phenolharzschaumstoffen gegen Farbänderungen durch Einwirkung von Licht und/oder Luft und/oder Wärme zumindest für eine begrenzte Zeit deutlich zu erhöhen, ohne dass dabei wesentliche andere allgemeine Anforderungen an das Verarbeitungsverhalten der Phenolschaumharze oder der daraus hergestellten Schäume beeinträchtigt werden. Solche wesentlichen Anforderungen sind z.B.:

a) Ausreichende Lagerfähigkeit der Phenolschaumharze,

b) keine negative Beeinflussung des Schäum- und Härtungsverhaltens der Resolharze bzw. der schäumfähigen Phenolharz-Härter-Treibmittel (Farbstoff)-Mischungen, wie z.B. Verlängerung oder sogar Unterbindung des Schäum- und Härtungsvorganges, Lunkerbildung etc.,

c) keine Beeinträchtigung wesentlicher Gebrauchseigenschaften der Schäume, wie z.B. Veränderung des optimalen Anteils an geschlossenen oder offenen Zellen, Veränderung der mittleren Zellendurchmesser, der Schaumstoffdichte, der mechanischen Eigenschaftswerte oder bei den sogenannten Phenolharz-Blumensteckschaumstoffen eine Veränderung der Wasseraufnahme- und Retentionseigenschaften.

In Erfüllung dieser Aufgabe wurden nun Schäume aus Phenolresolharzen mit reduzierter Neigung zu Verfärbungen gefunden, die durch einen zusätzlichen Gehalt an Salzen der Phosphin- oder Phosphonsäure gekennzeichnet sind.

Es ist zwar bekannt, Triarylphosphite Phenolresolharzen bei deren Herstellung zuzusetzen, um die bei der Heisshärtung solcher Harze im allgemeinen eintretende Verfärbung bzw. Braunfärbung zu vermeiden. Der Zusatz solcher Verbindungen zu schäumfähigen Phenolresolharzen führt jedoch dazu, dass der Schaum entweder zusammenfällt oder eine unerwünscht hohe Dichte erhält. Auch ist der Farbstabilisierungseffekt solcher Verbindungen ungenügend. Gleiches gilt auch für Dicarbonsäureester des Pentaerythritylphosphits sowie verschiedene Alkyl- und Arylphosphite, die entweder als Lichtstabilisatoren oder als Antioxidantien und Stabilisatoren für Polyester-, Epoxid- und Alkydharze, sowie für PVC, Polyamide und Cellulosederivate bereits beschrieben sind. (Vgl. US-PS 36 34 317 und DE-OS 25 06 207).

Überraschenderweise zeigen jedoch die Salze der Phosphin- und Phosphonsäure bei Schäumen, die in Gegenwart von Säuren bei Raum- oder mässig erhöhter Temperatur aus Phenolresolharzen hergestellt sind, eine erhöhte farbstabilisierende Wirkung gegen Farbänderungen durch direkte Einwirkung von Licht und/oder Luft und/ oder Wärme. Dabei treten die oben genannten unerwünschten Nebenwirkungen bei der Herstellung der erfindungsgemässen Schäume nicht ein und die erhaltenen Schäume besitzen die gewünschten Gebrauchseigenschaften. Es ist demzufolge bei der Herstellung der erfindungsgemässen Schäume nicht nötig, zur Einhaltung der wesentlichen Gebrauchseigenschaften der Schäume eine Korrektur der an sich bekannten Rezeptur für die Herstellung der Schäume durchzuführen.

Die Herstellung der erfindungsgemässen Schäume erfolgt daher in an sich bekannter Weise durch Aufschäumen und Härten eines schäumfähigen bzw. schäumbaren Gemisches aus Phenolresolharz, Treibmittel, Härter, oberflächenaktive Substanzen sowie gegebenenfalls Farbstoffen und/oder anderen Zusatzstoffen wie Füllmittel oder Flammschutzmittel. Als Treibmittel werden vorzugsweise niedrig siedende, bei Raumtemperatur flüssige Kohlenwasserstoffe, wie z.B. n-Pentan und als Härter vorzugsweise aromatische Sulfonsäuren oder Salzsäure eingesetzt. Art und Menge der oberflächenaktiven Substanzen beeinflussen die Porigkeit des erhaltenen Schaumes. Ihre richtige Dosierung zur gewünschten Beeinflussung der Poren ist dem Fachmann ebenfalls bekannt.

Die Salze der Phosphon- oder Phosphinsäure können dem Gemisch in jedem beliebigen Stadium vor dem Aufschäumen untergemischt werden. So ist es möglich, die Salze in dem Phenolresolharz, gegebenenfalls mit den oberflächenaktiven Substanzen, vorzumischen und dieses Gemisch mit den übrigen Bestandteilen anschliessend zu vermischen. Dies ist eine bevorzugte Durchführungsform. Es ist aber auch möglich, alle Bestandteile des schäumfähigen Gemisches gemeinsam mit den Salzen zu vermischen.

In manchen Fällen, besonders wenn man die Salze dem bereits vorgefertigten Gemisch untermischt, ist es vorteilhaft, die Salze in Wasser zu lösen oder zu dispergieren und diese Lösungen oder Dispersionen den schäumfähigen Resolharzmischungen zuzusetzen. Auf diese Weise erhält man schnell eine gleichmässige Verteilung der stabilisierend wirkenden Salze in dem aufzuschäumenden Gemisch und dem daraus gebildeten Phenolharzschaum.

Die erfindungsgemäss eingesetzten Stabilisatoren umfassen die anorganischen Salze der Phosphinsäure und der Phosphonsäure. Die Phosphinsäure entspricht der allgemeinen Formel $H_2P(O)OH$; in ihren Salzen, die als Phosphinate oder auch Hypophosphite bezeichnet werden, ist nur das am Sauerstoff gebundene Wasserstoffatom durch ein Metalläquivalent ersetzt. Die bevorzugt eingesetzten Metallsalze sind die Alkalimetallsalze, die der Formel Me $H_2PO_2 \cdot xH_2O$ entsprechen.

Die weiterhin erfindungsgemäss einsetzbaren Salze der Phosphonsäure sind unter dem Namen Phosphonate bzw. primäre und sekundäre Phosphite bekannt. Sie leiten sich von der Phosphonsäure $HP(O)(OH)_2$ ab, wobei ein oder beide an den Sauerstoff gebundenen Wasserstoffatome durch ein Metalläquivalent ersetzt sein können. Die bevorzugt einzusetzenden Phosphonate sind diejenigen der Alkalimetalle Me $H_2PO_3$ und $Me_2HPO_3$ (Me = Na oder K), sowie die entsprechenden Calciumsalze.

Die Menge an Stabilisatoren, die erfindungsgemäss eingesetzt werden, soll mindestens 0,1 Gew.-%, bezogen auf den fertigen Schaum, betragen. Vorzugsweise werden Mengen zwischen 0,3 und 1,0 Gew.-%, bezogen auf das Gewicht des fertigen Schaums, eingesetzt. Im allgemeinen brauchen nicht mehr als 5 Gew.-% eingesetzt zu werden, um die erfindungsgemässe Wirkung zu zeigen, obwohl es prinzipiell auch möglich ist, noch grössere Mengen einzusetzen.

Die farbstabilisierende Wirkung der erfindungsgemässen Zusätze wird zweckmässigerweise durch Belichtung von Schaumstoffproben mit Lampen, deren spektrale Energieverteilung der des Sonnenlichtes sehr nahe kommt und die auch zu einer gleichzeitigen Erwärmung der Proben führt, gut zeitraffend erfasst bzw. nachgewiesen. Es wurde festgestellt, dass durch eine Bestrahlung der stabilisierten Schaumstoffe mit einer 300 Watt-Lampe (Osram-Vitalux®) bei einem Probenabstand von 50 cm etwa eine 10fache Zeitraffung gegenüber einer natürlichen intensiven Sonnenlichteinwirkung erzielt wird, so dass auf diese Weise die Langzeitwirkung der erfindungsgemässen Stabilisatoren ermittelt werden konnte.

Beispiel 1

Zur Herstellung von weitgehend geschlossenzelligen Phenolharzschaumstoffen wurden in 500 g eines handelsüblichen Phenolresolharzes (Handelsprodukt T 612 S der Dynamit Nobel AG, Troisdorf) bei 20 °C 2,5 g verschiedener Phosphinate bzw. Hypophosphite gelöst und danach der Mischung 60 cm n-Pentan unter Rühren zugesetzt. Es bildete sich dabei eine relativ stabile Emulsion. Zur Auslöung einer exothermen Schäum- und Härtereaktion wurden der Emulsion anschliessend 20 cm³ einer 65%igen wässrigen Lösung von p-Phenolsulfonsäure unter Rühren zugesetzt. Das so hergestellte schäumfähige Gemisch wurde in Papiertüten (∅ 170 mm, Höhe = 400 mm) gegossen und diese dann in einen Umluftwärmeschrank, Lufttemperatur 50 °C, gestellt.

Die Gemische schäumten innerhalb von 5–15 Minuten auf und der zunächst sahneartige Schaum erhärtet dann innerhalb weiterer 30 Minuten zu einem sprödharten Phenolharzschaumstoff.

Das bei den Versuchen benutzte verschäumbare Phenolresolharz T 612 S hatte folgende Eigenschaften:

| | |
|---|---|
| Viskosität bei 20 °C:<br>(nach Hoeppler) | 2500 mPa·s |
| Festharzgehalt: | 72 Gew.-% |
| pH-Wert: | 8,0 |
| Wassergehalt<br>(nach K. Fischer) | 18,0 Gew.-% |

Als Farbstabilisatoren wurden benutzt:

A = Kaliumhypophosphit
B = Natriumhypophosphit
C = Natriumphosphit
D = ohne Farbstabilisator.

Nach dem Erkalten der in der Regel zylinderförmigen Schaumstoffproben wurden diese, soweit möglich, etwa in der Mitte senkrecht zur Schäumrichtung durchgesägt und dann das Gefüge der gesamten Probe und die Schaumstoffstruktur auf Gefüge und Struktur untersucht. Bei allen Proben war das Phenolresolharz in der Formtüte voll und fehlerfrei ausgeschäumt. Die Schaumstoffstruktur ist in den folgenden Tabellen wie folgt gekennzeichnet:

g = Schaum grobporig, mittlerer Zellendurchmesser ca. >0,4 mm,
mp = Schaumstoff mittelporig, mittlerer Zellendurchmesser 0,3 bis 0,4 mm,
mfp = Schaumstoff mittel bis feinporig, mittlerer Zellendurchmesser von 0,2 bis 0,3 mm,
fp = Schaumstoff feinporig, mittlerer Zellendurchmesser <0,2 mm.

In den Tabellen 1 und 2 ist als weiteres allgemeines Beurteilungskriterium für den Schaumstoff noch seine Dichte angegeben.

Zur Beurteilung der Widerstandsfähigkeit der nach ihrer Herstellung zunächst weiss bis gelb bzw. leicht rosa gefärbten Schaumstoffproben gegen Farbveränderungen durch Einwirkung von Licht und/oder Wärme wurden zylinderförmige Schaumstoffproben (∅ 30 mm, h = 60 mm) verschiedene Zeiten im Abstand von 50 cm unter einer 300 Watt-Lampe (Osram-Vitalux®-Lampe) oder 96ʰ in einem Wärmeschrank bei 60 °C Umlufttemperatur gelagert. Dabei verfärbten sich die Proben teilweise ähnlich wie bei einer natürlichen wochen- oder monatelangen Ablagerung nach braun oder rotbraun.

Die durch Licht- und/oder Wärmeeinwirkung eingetretenen Farbänderungen wurden gegenüber einem nicht mit Licht und/oder Wärme behandelten Material (Standardmuster) nach DIN 5033 mit einem Filterfarbmessgerät Typ RFC 3 der Fa. Zeiss im Bereich von 400 bis 699 Nanometer mit Lichtart D 65 (Tageslicht) miteinander verglichen. Die dabei erhaltenen Werte sind in Tabelle 1 und 2 aufgeführt, dabei bedeuten:

Δ L = Helligkeitsabweichung, + Probe ist heller
– Probe ist
dunkler als
Standardmuster
Δ E = Kumulierte Gesamtabweichung der Rot/
Grün- und der Gelb/Blau-Abweichung.

Nach diesen Vergleichsmessungen hat diejenige Probe die geringste Farbabweichung bzw. die höchste Widerstandsfähigkeit gegen eine Farbänderung durch Licht und/oder Wärmeeinwirkung, die die grösste positive Δ L-Wert-Abweichung gegenüber der D-Probe und gleichzeitig den geringsten Δ E-Wert hat. In Tabelle 1 sind die Ergebnisse mit den 48 Stunden bei 60 °C gelagerten Proben aufgeführt. Die angegebenen Dichtewerte sind diejenigen, die zusammen mit der Porenstruktur nach der Herstellung der Schäume, jedoch vor deren Belichtung bzw. Warmlagerung, ermittelt wurden.

Vergleichsbeispiel

Analog Beispiel 1 wird eine schäumfähige Mischung der gleichen Zusammensetzung hergestellt mit dem Unterschied, dass anstelle der erfindungsgemässen Phosphinate bzw. Phisphite Triphenylphosphit oder Trisnonylphenylphosphit eingesetzt wurde.

Die Mischung mit dem Trisnonylphenylphosphit war nach dem Aufschäumen wieder zusammengefallen; d.h. dieser Zusatz verhindert ein einwandfreies Aufschäumen und Aushärten.

Der das Triphenylphosphit enthaltene Schaum hatte eingefallene Ränder und zeigte nahezu die gleichen Farbmesswerte wie der in Beispiel 1 genannte, unbehandelte Schaum. Seine Dichte war mit 29,1 kg/cm³ noch grösser als diejenige des stabilisatorfreien Schaumes. Daraus geht hervor, dass Triphenylphosphit vollkommen ungeeignet zur Erzielung der gewünschten Stabilisierung ist.

Tabelle 1 (Versuchsreihe VE 950)

| Stabilisator | A | B | C | D |
|---|---|---|---|---|
| Schaumstoffstruktur | mfp | mp | mp | mp |
| Δ L (gemäss DIN 5033) | –23 | –27 | –40 | –43 |
| Δ E (gemäss DIN 5033) | 29 | 36 | 50 | 50 |
| Schaumstoffdichte | 26,3 | 25,7 | 27,2 | 25,9 |

Tabelle 2

| Stabilisator | A | B | C | D |
|---|---|---|---|---|
| Schaumstoffstruktur | mfp | mp | mp | mp |
| Δ L (gemäss DIN 5033) | –26 | –30 | –34 | –38 |
| Δ E (gemäss DIN 5033) | 34 | 37 | 42 | 45 |
| Dichte (kg/cm³) | 26,3 | 25,7 | 27,2 | 25,9 |

Beispiel 2

Zur Herstellung von weitgehend offenzelligen, grün eingefärbten Phenolharzschaumstoffmustern, wie sie zur Herstellung von sogenannten Blumensteckschäumen verwendet werden, wurde gemäss Beispiel 1 verfahren, jedoch wurde anstelle des dort genannten Harzes ein im Handel unter der Bezeichnung Phenolresolharz T 910 S (Handelsprodukt der Dynamit Nobel AG, Troisdorf) benutzt, welches vorab durch Zugabe von 0,4 Gew.-% einer 50%igen wässrigen, essigsauren Malachitgrünlösung eingefärbt wurde.

Durch den hohen Grad an Offenzelligkeit bedingt, zeigen solche Schäume beim Auflegen auf eine Wasseroberfläche in der Regel innerhalb weniger Minuten eine Wasseraufnahme von >90 Vol.-%. Der Grad der Offenporigkeit ist bei solchen Schäumen ein entscheidendes Qualitätskriterium und wurde daher in dieser Versuchsreihe durch Messung der Saugzeiten mit berücksichtigt. Zur Bestimmung der Saugzeiten wurden aus den Versuchsschäumen zylinderförmige Prüfkörper ($\varnothing$ 81 mm, h = 60 mm) herausgeschnitten und diese nach 16 bis 24 stündiger offener Lagerung (zum Pentan-Luft-Austausch) auf eine Wasseroberfläche, Wassertemperatur 20 °C, aufgelegt und die Zeit gemessen, die notwendig war, bis sich die Prüfkörper restlos mit Wasser vollgesogen hatten bzw. total benetzt erschienen.

Die Prüfung der durch Belichtung der Proben verursachten Farbänderungen wurde analog wie in Beispiel 1 beschrieben, vorgenommen.

Die Ergebnisse sind in Tabelle 3 aufgeführt; in die Tabelle wurden auch Vergleichsversuche mit Triphenylphosphit (Versuch E) und Trisnonylphenylphosphit (Versuch F) aufgenommen. Mit diesen, nicht erfindungsgemässen Stabilisatoren ergibt sich praktisch keine Verbesserung der Farbwerte, obwohl die Schaumstoffeigenschaften teilweise – mit Ausnahme der Druckfestigkeit bei Versuch E – sich praktisch nicht verschlechtert haben. Alle Schäume waren in der Formtüte voll und fehlerfrei aufgeschäumt.

Tabelle 3

| Stabilisator | A | B | C | D | E | F |
|---|---|---|---|---|---|---|
| Schaumstoffstruktur | mfp | mfp | mfp | mfp | fp | mfp |
| $\Delta$ L (gemäss DIN 5033) | −15 | −14 | −17 | −21 | −23 | −26 |
| $\Delta$ E (gemäss DIN 5033) | 28 | 30 | 32 | 43 | 43 | 43 |
| Dichte (g/cm$^3$) | 23,9 | 23,1 | 22,3 | 21,9 | 22,6 | 21,9 |
| Druckfestigkeit (g/cm$^2$) | 1280 | 1250 | 1160 | 1150 | 1170 | 860 |
| Wasseraufnahmegeschw. (min/sec) | 3'35" | 3'52" | 3'05" | 3'48" | 3'07" | 1'27" |

## Patentansprüche

1. Schäume aus Phenolresolharzen mit reduzierter Neigung zu Verfärbungen, gekennzeichnet durch einen zusätzlichen Gehalt an Salzen der Phosphin- oder Phosphonsäure als Stabilisatoren.

2. Schäume gemäss Anspruch 1, gekennzeichnet durch einen Gehalt an 0,1 bis 5,0, vorzugsweise 0,3 bis 1,0 Gew.-% an den Salzen der Phosphin- oder Phosphonsäure.

3. Schäume gemäss Anspruch 1 oder 2, dadurch gekennzeichnet, dass sie die Alkalimetallsalze der Phosphinsäure und/oder der Phosphonsäure enthalten.

4. Schäume gemäss einem der Ansprüche 1 bis 3, dadurch gekennzeichnet, dass sie mit einem Triphenylmethan-Farbstoff eingefärbt sind.

5. Verfahren zur Herstellung von Schäumen gemäss einem der Ansprüche 1 bis 4, dadurch gekennzeichnet, dass man einem schäumbaren Phenolresolharz die Stabilisatoren untermischt und anschliessend das erhaltene Gemisch mit Treibmittel, Härter, oberflächenaktiven Substanzen und gegebenenfalls Farbstoffen in an sich bekannter Weise zu den Schäumen weiterverarbeitet.

6. Verfahren zur Herstellung von Schäumen gemäss einem der Ansprüche 1 bis 4, dadurch gekennzeichnet, dass die Stabilisatoren, gegebenenfalls in wässriger Lösung, einer aufzuschäumenden Mischung aus Phenolresolharz, Treibmitteln, Härtern und gegebenenfalls Farbstoffen vor deren Aufschäumen und Aushärten untergemischt werden und anschliessend die Schäumung und Aushärtung in an sich bekannter Weise durchgeführt wird.

## Revendications

1. Mousses dérivées de résines à base de résol phénolique ayant une tendance réduite à la décoloration, caractérisées en ce qu'elles contiennent en outre des sels de l'acide phosphinique ou phosphonique en tant que stabilisants.

2. Mousses selon la revendication 1, caractérisées par une teneur de 0,1 à 5,0, de préférence de 0,3 à 1% en poids en sels de l'acide phosphinique ou phosphonique.

3. Mousses selon la revendication 1 ou 2, caractérisées en ce qu'elles contiennent des sels de métaux alcalins de l'acide phosphinique et/ou de l'acide phosphonique.

4. Mousses selon l'une quelconque des revendications 1 à 3, caractérisées en ce qu'elles sont colorées avec un agent à base de triphénylméthane.

5. Procédé de fabrication de mousses selon l'une quelconque des revendications 1 à 4, caractérisé en ce qu'on incorpore les stabilisants à une résine expansible dérivée de résol phénolique et transforme ensuite le mélange obtenu, de façon connue en soi, en mousses avec un agent d'expansion, un durcisseur, des substances tensioactives et éventuellement des colorants.

6. Procédé de fabrication de mousses selon l'une quelconque des revendications 1 à 4, caractérisé en ce que les stabilisants, éventuellement en solution aqueuse, sont incorporés à un mélange à expanser de résine à base de résol phénolique, d'agents d'expansion, de durcisseurs et éventuellement de colorants avant son expansion et son durcissement et en ce que l'expansion et le durcissement ont lieu ensuite de façon connue en soi.

**Claims**

1. Phenolresol resin foams with reduced tendency to discolouration, characterised by an additional content of salts of phosphinic or phosphonic acid as stabilizers.

2. Foams according to claim 1, characterised by a content of 0.1 to 5.0, preferably 0.3 to 1.0 weight % of the salts of phosphinic or phosphonic acid.

3. Foams according to claim 1 or 2, characterised in that they contain the alkali metal salts of phosphinic acid and/or phosphonic acid.

4. Foams according to one of claims 1 to 3, characterised in that they are coloured with a triphenylmethane dye.

5. Process for the production of foams according to one of claims 1 to 4, characterised in that the stabilizers are pre-mixed with a foamable phenolresol resin and then the mixture obtained is worked up with blowing agent, hardener, surface-active substances and optionally dyes in known manner to produce the foams.

6. Process for the production of foams according to one of claims 1 to 4, characterised in that the stabilizers, optionally in aqueous solution, are pre-mixed with a foamable mixture of phenolresol resin, blowing agents, hardeners and optionally dyes before foaming thereof and hardening and then the foaming and hardening is carried out in known manner.